# EUROPEAN PATENT APPLICATION

(11) **EP 4 425 231 A1**
(43) Date of publication of application: **04.09.2024**
(21) Application number: 22886890.7
(22) Date of filing: 21.10.2022
(51) Int. Cl.: G02B 6/40

(54) **OPTICAL CONNECTOR AND PLUG**

(30) Priority: 28.10.2021 JP 2021176749
(71) Applicant: Hakusan, Inc., Kanazawa-shi, Ishikawa 920-8203 (JP)
(72) Inventor: TAKEZAKI Motohito, Kanazawa-city Ishikawa 9208203 (JP); MATSUDA Kentaro, Kanazawa-city Ishikawa 9208203 (JP)
(74) Representative: TBK
(86) International application number: PCT/JP2022/039279
(87) International publication number: WO 2023/074563

(57) **Abstract**

[Problem] To provide an optical connector that has small number of components and a simple configuration, and can reduce production costs, improve productivity, and reduce the size thereof.

[Solution] In this optical connector (10), a first connector (110) has: a first connector housing (120) formed in a tubular body shape and having an accommodation section therein; a spacer (400) which is in sliding contact with an inner surface of the accommodation section of the first connector housing and in which a first ferrule (130) is slidably provided; a biasing member (300) which biases the spacer toward a second connector (210) side; and a stopper (500) fixed to a rear section of the first connector housing on the side opposite from the second connector, wherein a recessed groove through which a first optical cable A passes is formed in the spacer and the stopper, and the biasing member has, between the spacer and the stopper, a pair of coil springs provided on both sides of the first optical cable A.

## Description

### Technical Field

The present invention relates to an optical connector and a plug which optically connect optical fibers of an optical cable for transmitting optical signals.

### Background Art

Since high-speed communication of a large amount of information is made possible, an optical cable using optical fibers is widely used for information communication for home use and industrial use.

For example, Patent Literature 1 (Japanese Patent Laid-Open No. 1998-160969) discloses an optical connector which solves a problem in that a conventional product such as a MPO connector includes a large number of components and work such as assembly and taking-out of a ferrule from a housing take time.

The optical connector described in Patent Literature 1 includes a tubular holder main body which houses one of a pair of ferrules to be butt-connected, biasing means for biasing the one ferrule in a direction of an insertion port opened at one end portion in a center axis direction of the holder main body, and an elastic claw which engages with the other ferrule inserted into the holder main body from the insertion port to be capable of engaging with and disengaging from the other ferrule. Both ferrules that are butt-connected are held between the elastic claw and the biasing means to ensure butt force between joining end faces of both the ferrules.

Patent Literature 2 (Japanese Patent Laid-Open No. 2010-54681) discloses an optical connector which suppresses an increase in a connection loss of optical fibers due to deformation and wobble of resin and enables a reduction in production costs, improvement of productivity, and a reduction in size.

The optical connector described in Patent Literature 2 is configured such that an elastically deformable locking piece formed in a first connector is engaged with a locking projection formed in a second connector, whereby the first connector and the second connector are fit and the optical fibers are optically connected. A ferrule including a first optical fiber insertion hole through which a terminal portion of one optical fiber is inserted is attached to the first connector in a state in which the ferrule is biased to the second connector side by a coil spring. A second fiber insertion hole into which a terminal portion of the other optical fiber is inserted is directly formed in the second connector. The second connector is molded by a material harder compared with the first connector.

Patent Literature 3 (Japanese Patent Laid-Open No. 2021-60451) discloses an optical connector capable of suppressing local stress from being applied to an optical fiber.

The optical connector described in Patent Literature 3 includes an optical fiber, a ferrule including a insertion hole through which the optical fiber is inserted, a housing which houses the ferrule, two springs which are disposed to hold the optical fiber therebetween and bias the ferrule to the front, and a supporting section which supports the two springs from the rear. The supporting section includes a first divided member and a second divided member being combined and includes at least two latch sections respectively locked to at least two locking holes formed in the housing. The two latch sections are disposed side by side in the up-down direction.

Patent Literature 4 (Japanese Patent Laid-Open No. 2015-184359) discloses an optical connector having versatility and having high reliability that an optical fiber cord less easily comes off from an optical connector.

The optical connector described in Patent Literature 4 includes a fixing member formed by engaging two half divided bodies which press a protective tube, which covers a step section of an outer circumferential surface of a spring-pressed optical fiber attachment section, from an outward direction toward the optical fiber attachment section. Consequently, the protective tube is securely fixed to the optical fiber attachment section.

Patent Literature 5 (Japanese Patent Laid-Open No. 2015-22213) discloses an optical connector excellent in assembly workability and an assembly method for the optical connector.

The optical connector described in Patent Literature 5 includes a housing, a ferrule housed in the housing, and a biasing member which extends and contracts in one direction in the housing and biases the ferrule. The biasing member includes, in the center in the width direction thereof, a recess which houses an optical fiber extending in the longitudinal direction of the housing and connected to the ferrule.

### Citation List

### Patent Literature

Patent Literature 1: Japanese Patent Laid-Open No. 1998-160969
Patent Literature 2: Japanese Patent Laid-Open No. 2010-54681
Patent Literature 3: Japanese Patent Laid-Open No. 2021-60451
Patent Literature 4: Japanese Patent Laid-Open No. 2015-184359
Patent Literature 5: Japanese Patent Laid-Open No. 2015-22213

### Summary of Invention

### Technical Problem

In the optical connectors described in Patent Literatures 1 and 2 described above, the optical cable is passed through the coil spring for biasing the ferrule to the front of the housing. In such a configuration, since the optical cable and the coil spring connected to the ferrule cannot be easily separated, assemblability of the optical connector is deteriorated. When the optical cable is to be changed, the coil spring needs to be detached from the housing at the same time, which causes workability of connection switching to be deteriorated.

In the optical connectors described in Patent Literatures 3 to 5, the pair of coil springs for biasing the ferrule to the front of the housing is used. The coil springs are disposed on both sides of the optical cable.

However, in the optical connectors described in Patent Literatures 3 to 5, since the optical connectors are optical connectors of an MPO type in which a dedicated adopter is used, there are disadvantages in that the number of components increases, a configuration is complicated, assembly takes time, and cost increases. Since a size is larger compared with an optical connector of an MT type, it is difficult to mount the optical connectors on a device at high density. Further, in the optical connectors described in

Patent Literatures 3 to 5, since the optical fiber passes the insides of components (a spring bush and the like) of the optical connectors, there is a problem in that, if the ferrule is fixed to a fiber end face, the optical connectors cannot be easily replaced.

Most of conventional optical wires are for the purpose of long distance communication. Since the spring is inserted into the optical fiber and maintenance cannot be performed, the entire optical fiber attached with the optical connector is replaced when a defect occurs. Therefore, when the conventional optical connector is used in an optical wire mounted on an electronic substrate inside a server, the optical fiber needs to be cut in order to replace the optical connector (or a component thereof) or the entire substrate needs to be replaced when a defect is found in wiring or connection.

An object of the present invention, which has been made to solve the disadvantages described above, is to provide an optical connector which has a small number of components and a simple configuration and can reduce manufacturing costs, improve productivity, and reduce the size thereof.

Another object of the present invention is to provide an optical connector with which it is possible to easily replace the optical connector or a connection component without cutting an optical fiber.

Still another object of the present invention is to provide an optical connector which is small in size and with which high-density wiring is possible with a low loss.

Still another object of the present invention is to provide an optical connector with which it is possible to simply perform work such as connection and connection switching of optical fibers.

### Solution to Problem

(1) An optical connector according to one aspect is an optical connector including: a first connector to which a first optical cable A is attached; and a second connector to which a second optical cable B is attached, terminals of an optical fiber Af included in the optical cable A and an optical fiber Bf included in the optical cable B being optically connected by fitting of the first connector and the second connector, wherein the first connector includes: a first connector housing formed in a tubular body shape and having an accommodation section therein; a spacer which is in sliding contact with an inner surface of the accommodation section of the first connector housing and allows sliding of a first ferrule; a biasing member which biases the spacer toward the second connector side; and a stopper fixed to a rear section of the first connector housing on an opposite side from the second connector, the second connector includes: a second connector housing formed by a tubular body; and an accommodation section capable of accommodating a second ferrule therein, a locking piece and a guide piece extended toward the second connector housing are respectively provided in the first connector housing, locking sections to which the locking pieces can be locked and guide sections which guide the guide pieces are formed in the second connector housing, a recessed groove through which the first optical cable A passes is formed in the spacer and the stopper, and the biasing member includes, between the spacer and the stopper, a pair of coil springs provided on both sides of the first optical cable A.

According to the present invention, the locking piece and the guide piece which are extended toward the second connector housing are respectively provided in the first connector housing, and the locking sections to which the locking pieces can be locked and the guide sections which guide the guide pieces are formed in the second connector housing. Therefore, by moving the first connector housing to the second connector housing side, locking the locking pieces of the first connector housing to the locking sections of the second connector housing, and guiding the guide pieces of the first connector housing to the guide sections of the second connector housing, it is possible to fit the first connector housing and the second connector housing in a state in which the first connector housing and the second connector housing are accurately positioned.

Since the biasing member includes the pair of coil springs provided on both the sides of the first optical cable A and passed through the first connector housing, it is possible to abut the terminals of the optical fiber Af included in the optical cable A and the optical fiber Bf included in the cable B in a state in which the terminals are pressurized by a compression force of a predetermined coil spring. Since the spacer is slidably in slide contact with the inner surface of the accommodation section of the connector housing, making an accurate parallel motion possible, it is possible to optically connect a pair of optical fibers in a state in which a connection loss is small.

It is possible to independently perform work for providing, in the first connector housing, a member in which the first optical cable A and the first ferrule are coupled, and work for providing the coil springs in the first connector housing. Therefore, workability in a site is excellent.

Further, a recessed groove through which the first optical cable A passes is formed in the spacer and the stopper. Therefore, by allowing the first optical cable A connected to the first ferrule to pass through the recessed groove formed in the spacer and the stopper, it is possible to compactly house the spacer and the stopper in the housing and wire the optical cables. Since the biasing member includes, between the spacer and the stopper, the pair of coil springs provided on both the sides of the first optical cable A, it is possible to independently dispose, in the housing, an assembly to which the first ferrule and the first optical cable A are connected and the coil springs or replace the assembly and the coil springs. Assemblability of those members and workability are improved.

Therefore, even if a circuit of an optical cable is wired once, when a defect is found in a connecting portion of the optical cable, it is possible to easily replace an entire connector including a spacer and a stopper (a bush) while leaving the optical cable connected to the ferrule. In particular, when there is a defect in an optically mounted electronic substrate and the substrate is replaced, it has been necessary to replace the entire substrate including an optical connector connected to an optical fiber. On the other hand, with the optical connector of the present invention, when the electronic substrate is replaced, the connector components can be detached and used for connection to the optical fiber again. When there is a defect in the optical connector itself, it is possible to replace only the connector components without cutting the optical fiber and perform maintenance.

Note that, in this specification, the first connector is referred to as plug and the second connector is referred to as receptacle plug (or simply plug). However, it is optional which of the first connector and the second connector is the plug or the receptacle plug.

(2)
An optical connector according to a second invention is the optical connector according to the invention of the one aspect, wherein two axes of the pair of coil springs may be provided in parallel and provided on planes including center axes of two guide pin insertion holes of the first ferrule, and the pair of coil springs may be disposed to be separated from each other by a predetermined distance on outer sides of the two guide pin insertion holes.

Consequently, it is possible to uniformly apply a sufficient contact force to all optical fibers. Since the spacer is slidably in slide contact with the inner surface of the accommodation section and the pair of coil spring axes are on the same plane as the center axes of the guide pin insertion holes, two stresses generated from the pair of coil springs can accurately and uniformly apply a pressing force with respect to a connecting direction of the ferrule.

Further, since the coil springs are disposed to be separated by the predetermined distance on the left and right both outer sides of an extended line of the guide pin insertion holes, it is possible to sufficiently secure an biasing force of the coil springs while securing the number of optical fibers disposed in the center even if the ferrule is small.

Therefore, it is possible to securely connect the optical fibers even if the small ferrule is used. It is possible to obtain an optical connector having a small connection loss even when being used for high-density optical connection in which the number of connected optical fibers is large.

(3)
An optical connector according to a third invention is the optical connector according to the one aspect or the second invention, wherein a recessed groove formed in the spacer and a recessed groove formed in the stopper may be opened in a same direction and housed in the first connector housing.

In this case, in the first connector housing, the spacer, the stopper, and the biasing member are disposed to be opened in the same direction in the accommodation section. Therefore, an operator can easily assemble the optical connector by attaching the optical fiber, to which the ferrule is attached, to the tip of the spacer and inserting the optical fiber into the first connector housing together with the stopper.

When there is a defect in the optically mounted electronic substrate and the substrate is replaced, it is possible to detach the connector components by disengaging the stopper and use the connector components for connection to the optical fiber again. When there is a defect in the optical connector itself, it is possible to replace only the connector components without cutting the optical fiber and perform maintenance.

(4)
An optical connector according to a fourth invention is the optical connector according to any one of the one aspect to the third invention, wherein a spring constant of one of the coil springs may be 1.0 N/mm or higher and 6.0 N/mm or lower, and the spacer may be disposed to be capable of sliding 3.0 mm or less.

Consequently, it is possible to secure 1.0 mm or more and 5.0 mm or less as a compression distance for one spring with respect to a free length. It is possible to apply a contact force of 3.0 N more and 40 N or less to the ferrule. Therefore, it is possible to securely optically connect even a ferrule in which the number of connected optical fibers is N or more. Therefore, since high-density optical wiring can be performed even if the ferrule is small, it is possible to obtain an optical connector having high information transmission efficiency.

It is possible to use a spring having a spring constant of 1.0 N/mm or more and 6.0 N/mm or less. It is possible to set the thickness of metal of the spring to 0.3 mm or more and 0.6 mm or less. Therefore, it is possible to secure a small size and sufficient compression distance and it is possible to apply a sufficient contact force to the ferrule.

In this case, a slidable distance of the spacer is preferably 0.3 mm or more and 3.0 mm or less and more preferably 0.5 mm or more and 2.5 mm or less. A deflection amount for one spring is preferably set to 2.0 mm or more and 3.0 mm or less. A spring constant of one coil spring is preferably set to 1.0 N/mm or more and 6.0 N/mm or less and more preferably set to 2.0 N/mm or more and 5.0 N/mm or less.

(5)
An optical connector according to a fifth invention is the optical connector according to any one of the one aspect to the fourth invention, wherein the first connector housing may further include a pin holder, a pair of guide pins may be attachable to the pin holder, and the pin holder may be provided between the first ferrule and the spacer.

Consequently, it is possible to provide, on the first connector side (the plug side), a guide pin for performing precise positioning of the ferrule.

Since most of members projecting from the optical connector are provided on the first connector side (the plug side), the guide pin is attached to two ferrules and the operator can securely perform optical connection simply by paying attention such that a protrusion (in particular, a guide piece) of the first connector fits in the second connector.

Note that the ferrule and the pin holder may be housed in the optical connector at the same time when the operator connects the optical cable or the pin holder may be housed in advance in the optical connector.

(6)
An optical connector according to a sixth invention is the optical connector according to any one of the one aspect to the fourth invention, wherein the second connector housing may further include a pin holder, and the pin holder may include a pair of guide pins and may be provided between the second ferrule and the spacer.

Consequently, it is possible to provide, on the second connector side (the receptacle plug side), the guide pin which performs precise positioning of the ferrule.

Since the guide section is provided in the first connector (the plug) and the guide pin is provided in the second connector (the receptacle plug), the guide pin is not buried by the guide section and can be exposed from the second connector. Therefore, the operator can securely perform optical connection while viewing both of the guide section and the guide pin.

(7)
An optical connector according to a seventh invention is the optical connector according to any one of the one aspect to the sixth invention, wherein the locking pieces may include: elastic pieces projecting outward from the first connector housing; claw sections formed at a distal end portion of the elastic pieces; and releasing sections capable of unlocking the claw sections, the locking sections may further include hole sections in which the claw sections can be locked, and the second connector housing may further include a pin holder.

In this case, the locking piece of the first connector housing can be securely locked to the locking section of the second connector housing by the elastic piece of the locking piece being elastically deformed. The claw section formed in the elastic piece may be provided on a side (the inner side) that a pair of elastic pieces faces or may be provided on the outer side.

Since the releasing sections capable of unlocking the claw sections are provided in the locking piece, it is possible to easily disconnect the optical connector and reconnect the optical connector. Therefore, it is possible to easily perform component replacement and the like when there is a circuit change of optical wiring or a defect. Similarly, when the optically mounted substrate is replaced, it is possible to detach the connector components and use the connector components for connection of the optical fiber again. When there is a defect in the optical connector itself, it is possible to replace only the connector components without cutting the optical fiber and perform maintenance.

(8)
An optical connector according to an eighth invention is the optical connector according to any one of the one aspect to the seventh invention, wherein the first connector and the second connector may be capable of respectively housing ferrules having thickness of 1.0 mm or more and 1.5 mm or less, and an outer diameter of the coil springs may be 1.8 mm or more and 2.4 mm or less.

Since an MT ferrule smaller than the conventional ferrule can be mounted and connected, it is possible to perform small and high-density optical connection.

Since the size of the entire plug is small, it is possible to securely optically connect an optical fiber mounted on a substrate even in a narrow space, such as inside a computer.

(9)
An optical connector according to a ninth invention is the optical connector according to any one of the one aspect to the eight invention, wherein surfaces of respective both end portions of the coil springs may be machined with their respective end faces perpendicular to axes.

Since the surfaces of the respective both end portions (closed ends) of the coil springs are machined or processed with their respective end faces perpendicular to the axes, a pressing force of the coil springs acts in the same direction as the axial direction of the optical fiber. Therefore, it is possible to uniformly apply the pressing force to the optical fibers and stability of a spring force is improved.

Consequently, it is possible to obtain an optical connector having a low connection loss and high reliability.

(10)
An optical connector according to a tenth invention is the optical connector according to any one of the one aspect to the ninth invention, wherein a distal end of a first guide piece may extend further to the second connector than a distal end of the locking piece.

By configuring the optical connector as explained above, it is possible to precisely position the first connector housing and the second connector housing and, thereafter, fit the first connector housing and the second connector housing by guiding the guide piece of the first connector housing to the guide section of the second connector housing and, thereafter, causing the locking piece of the first connector housing to lock to the locking sections of the second connector housing. Even if the connector is attached and detached, the locking pieces are accurately inserted into the locking sections.

Therefore, it is possible to obtain an optical connector which reduces a positional deviation amount of the connected optical fiber while preventing breakage of the locking piece and has a low connection loss.

(11)
An optical connector according to an eleventh invention is the optical connector according to any one of the one aspect to the tenth invention, wherein the guide pieces may be provided on two facing surfaces different from surfaces on which the locking pieces are provided, and two guide pieces may be respectively formed in differently shaped rectangles.

Consequently, since all of four surfaces of the first connector (the plug) and all of four surfaces of the second connector (the receptacle plug) engage one another, it is possible to securely connect and fix the connectors to one another.

Since the two guide pieces have different shapes each other and a connecting direction of the plug and the receptacle plug is uniquely determined, it is possible to securely prevent misconnection. Therefore, it is possible to obtain an optical connector having high connection workability even if a large number of wires are necessary as inside a server.

Since the two guide pieces are respectively formed in the rectangular shapes, when the first connector (the plug) and the second connector (the receptacle plug) are connected, the first connector (the plug) and the second connector (the receptacle plug) are connected while being held in parallel to each other. Therefore, it is possible to prevent a precisely designed guide pin from colliding with a connection end face and securely perform optical connection.

(12)
A plug according to a twelfth invention is a plug connectable to the first connector or the second connector of the optical connector according to any one of the one aspect to the eleventh invention.

For example, even if one optical connector is mounted on a substrate, it is possible to connect the other optical connectors.

### Brief Description of Drawings

[Figure 1] Figure 1 is a schematic perspective view of an optical connector in a first embodiment.
[Figure 2] Figure 2 is a reference top view at the time when divided bodies of the optical connector in the first embodiment are opened.
[Figure 3] Figure 3 is a left side view of the optical connector in the first embodiment.
[Figure 4] Figure 4 is a sectional view at the time when the optical connector in the first embodiment is cut along an A-A' line in Figure 3.
[Figure 5] Figure 5 is a sectional view at the time when the optical connector in the first embodiment is cut along a B-B' line in Figure 3.
[Figure 6] Figure 6 is a sectional view at the time when a first connector and a second connector in Figure 5 are connected.
[Figure 7] Figure 7 is a schematic perspective view for explaining a pin holder of the optical connector in the first embodiment.
[Figure 8] Figure 8 is a schematic perspective view for explaining a ferrule of the optical connector in the first embodiment.
[Figure 9] Figure 9 is a reference top view at the time when divided bodies of an optical connector in a second embodiment are opened.
[Figure 10] Figure 10 is a schematic perspective view for explaining an end portion of a coil spring.
[Figure 11] Figure 11 is a schematic perspective view of an optical connector in a third embodiment.
[Figure 12] Figure 12 is a reference top view at the time when divided bodies of the optical connector in the third embodiment are opened.
[Figure 13] Figure 13 is a partially enlarged view of Figure 12.
[Figure 14] Figure 14 is a schematic explanatory diagram showing a connection end face of the optical connector in the third embodiment.

### Description of Embodiments

Embodiments of the present invention are explained below with reference to the drawings. A plurality of embodiments are explained as the embodiments of the present invention. However, each of the embodiments may be implemented alone or one or a plurality of embodiments may be implemented in combination.

In the following explanation, the same components are denoted by the same reference numerals and signs. Names and functions of the components are also the same. Therefore, detailed explanation about the components is not repeated.

### <First Embodiment>

### (Optical connector 10)

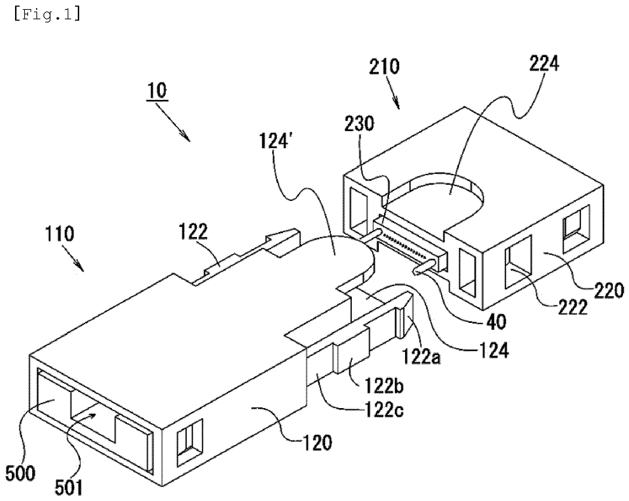

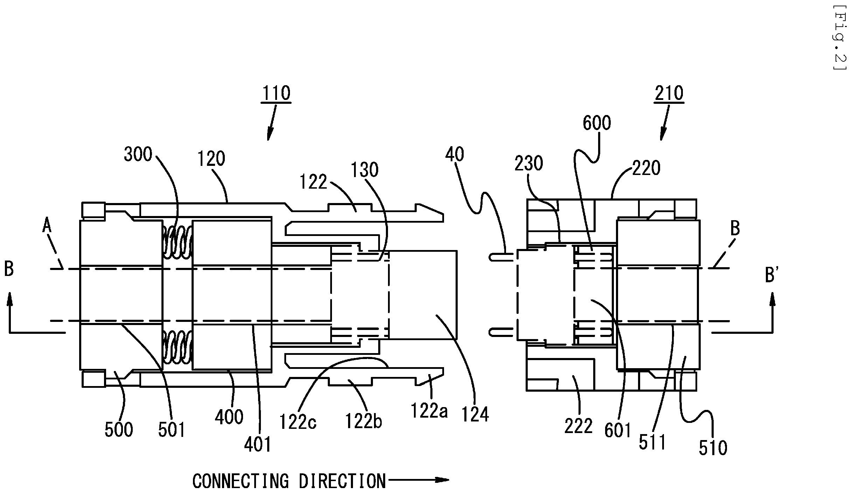

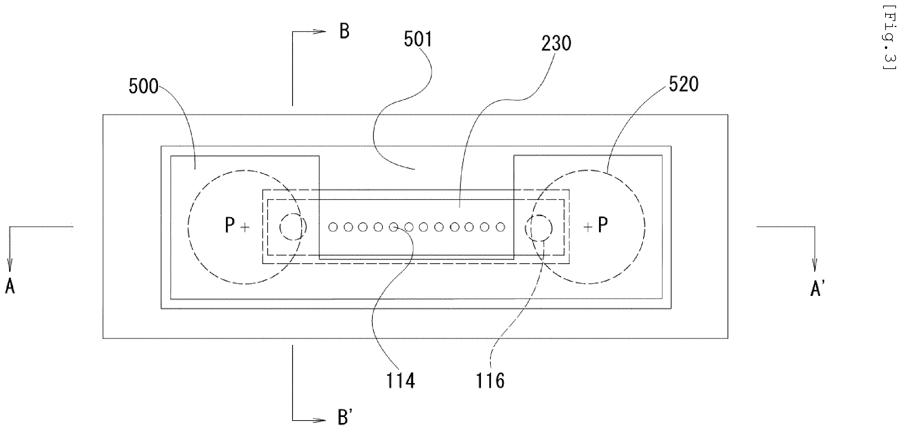

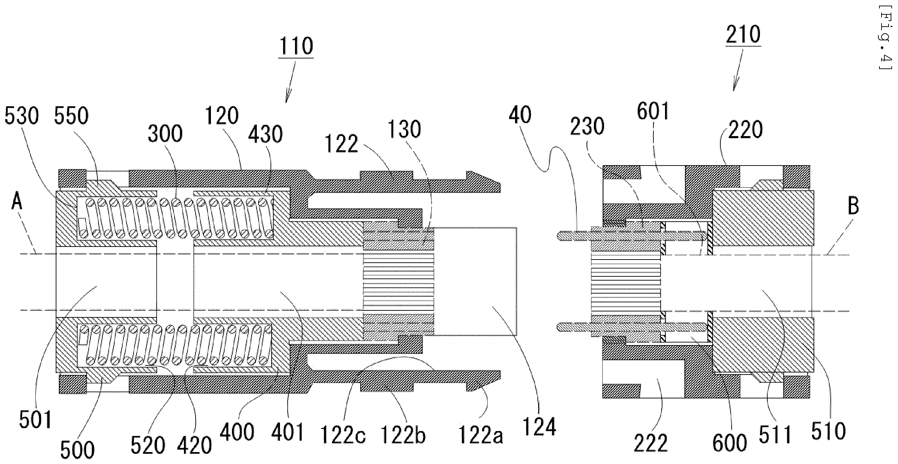

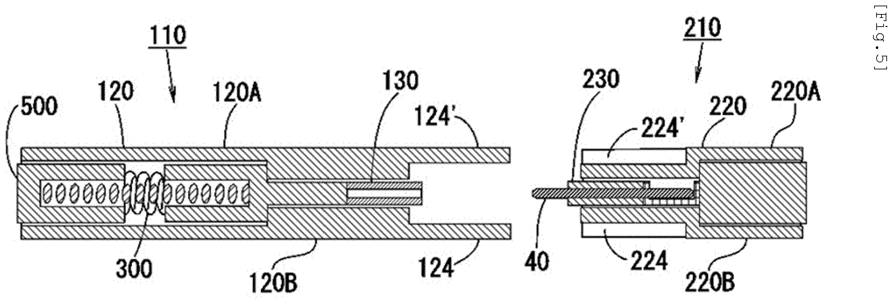

Figure 1 is a schematic perspective view illustrating an optical connector 10 according to a first embodiment. Figure 2 is a reference top view at the time when divided bodies of the optical connector 10 are opened and is a figure in which parts of a first connector housing 120 and a second connector housing 220 are removed. Figure 3 is a left side view of the optical connector 10 and is a figure indicating, as a dotted line, a part of a first ferrule 130 which is hidden by a stopper 500 and cannot be viewed. Figure 4 is a sectional view of the optical connector 10 cut along a A-A' line in Figure 3. Figure 5 is a sectional view at the time when the optical connector 10 is cut along a B-B' line in Figure 3.

As shown in Figure 1 to Figure 5, the optical connector 10 is an optical connector which can optically connect an optical cable A and an optical cable B by a first connector 110 to which the optical cable A is attached and a second connector 210 to which the optical cable B is attached fitting.

A plurality of optical fibers Af (not shown) are bound in a tape shape in the optical cable A. The first ferrule 130 is fixed to a terminal portion of the optical cable A. Similarly, a plurality of optical fibers Bf (not shown) are bound in a tape shape in the optical cable B. A second ferrule 230 is fixed to a terminal portion of the optical cable B. Terminals of the optical fibers Af and the optical fibers Bf are configured to be optically connected by a connection end face of the first ferrule 130 and a connection end face of the second ferrule 230 coming into contact at a predetermined pressing force with a biasing force of coil springs 300.

Note that, in the figures, in order to simplify the figures, the first optical cable A and the first ferrule 130 and the optical cable B and the second ferrule 230 are sometimes indicated by dotted lines.

### (First connector 110)

In this embodiment, the first connector 110 is an optical connection connector for connecting an end of the optical cable A and includes the first connector housing 120 capable of housing the first ferrule 130 of the optical cable A. The first connector housing 120 is an integral resin molded product and includes an accommodation section therein.

The first ferrule 130, a spacer 400, a stopper 500, and the coil springs 300 are accommodated in the accommodation section of the first connector 110. The connection end face of the first ferrule 130 projects from the accommodation section.

In the first connector 110, the first ferrule 130 and the spacer 400 are capable of sliding in parallel to a connecting direction and a biasing force is applied to the first ferrule 130 and the spacer 400 in the connecting direction by the coil springs 300. Consequently, when the first connector 110 and the second connector 210 are fit and connected, the first ferrule 130 and the second ferrule 230 come into contact and the first ferrule 130 and the spacer 400 slide to the rear end side of the first connector 110 (a direction opposite to the connecting direction).

Consequently, the coil springs 300 are compressed, a biasing force is generated, and a contact force is applied to the first ferrule 130 and the second ferrule 230.

The first connector housing 120 in this embodiment includes a rectangular-shaped first connector housing main body. Two locking pieces 122 and two guide pieces 124 and 124' respectively extend in the connecting direction (a direction of the second connector).

As the size of the first connector housing main body, lateral width is preferably 10 mm or more and 15 mm or less and more preferably 12 mm or more and 14 mm or less. Height is preferably 3 mm or more and 10 mm or less and more preferably 4 mm or more and 6 mm or less. Depth is preferably 20 mm or more and 60 mm or less and more preferably 30 mm or more and 50 mm or less. Consequently, an optical wire can be easily connected in a narrow environment such as a server.

### (Divided bodies of the first connector housing 120)

As shown in Figure 5, the first connector housing 120 can be divided into a divided body 120A and a divided body 120B and are divided in a direction (the up-down direction) perpendicular to the connecting direction. A reference top view at the time when the divided body 120A is removed from the first connector housing 120 is shown in Figure 2.

When the divided body 120A is detached from the first connector housing 120, it is possible to attach the first ferrule 130 and the optical cable A to the divided body 120B of the first connector housing 120 without separating the first ferrule 130 and the optical cable A. It is possible to detach the first ferrule 130 and the optical cable A from the first connector 110 without separating or cutting the first ferrule 130 and the optical cable A.

Note that, in this embodiment, an example is explained in which the first connector housing 120 includes the divided bodies 120A and 120B. However, the first connector housing 120 may be a tubular integral molded product.

When the first connector housing 120 has the tubular shape, since the spacer 400, the stopper 500, and the biasing member 300 are disposed to open in the same direction, by inserting these components from a rear part of the first connector housing 120, it is possible to attach and detach the first ferrule 130 and the optical cable A without separating the first ferrule 130 and the optical cable A. Therefore, it is possible to replace or retrofit the components. It is possible to assemble the first connector 110 by combining these components.

### (Spacer 400)

The spacer 400 in this embodiment is provided between the coil springs 300 and the first ferrule 130 and is a member which applies a biasing force of the coil springs 300 to the first ferrule 130. The spacer 400 makes it possible to compress the two coil springs 300 at the same time while holding the two coil springs 300 in parallel by being paired with the stopper 500.

The spacer 400 has a shape configured to be capable of sliding in the front-rear direction in the accommodation section of the first connector housing 120. Since the spacer 400 is disposed in slide contact with the inner surface of the accommodation section of the first connector housing 120 and slides in parallel to the connecting direction, the spacer 400 can accurately apply a biasing force in a direction parallel to the axes of guide pins 40 piercing through a ferrule. Consequently, it is possible to uniformly apply a contact force in a direction perpendicular to a connection end face of the ferrule and reduce a connection loss. Note that the connection end face of the ferrule is sometimes polished obliquely at 8° in order to suppress reflection. When the contact force is applied in this case, force to shift the first ferrule 130 and the second ferrule 230 from each other acts on the first ferrule 130 and the second ferrule 230. However, the spacer 400 can continue to apply the contact force in the connecting direction parallel to the axes of the guide pins 40.

In this case, a total length in the connecting direction of the spacer 400 is preferably equal to or larger than a quarter of the maximum length of the coil springs 300 stored in the accommodation section and more preferably equal to or larger than one third of the maximum length. The total length in the connecting direction of the spacer 400 is preferably equal to or larger than a half of the length of the long side of the connection end face of the ferrule and more preferably equal to or larger than two third of the length of the long side. Consequently, it is possible to secure a distance of sliding contact with the inner surface of the accommodation section of the first connector housing 120 and apply a biasing force in an accurate direction.

A cylindrical cavity 420 is provided on the inside of the spacer 400 such that the front end portions of the coil springs 300 can sink. The spacer 400 holds the two coil springs 300 in parallel. Consequently, it is possible to secure the length of the coil springs 300 while securing a distance in which the spacer 400 is in slide contact with the inner surface of the accommodation section of the first connector housing 120 and reduce the size (in particular, the length in the connecting direction) of the entire first connector 110.

In this case, the length of the cylindrical cavity 420 provided in the spacer 400 is preferably equal to or larger than a quarter of the maximum length of the coil springs 300 stored in the accommodation section and more preferably equal to or larger than one third of the maximum length.

### (Stopper 500)

The stopper 500 in this embodiment is provided on the rear end side of the coil springs 300, that is, the opposite side to the connecting direction and engaged and fixed to the first connector housing 120. The stopper 500 is a member which is paired with the spacer 400 and holds the two coil springs 300 in parallel.

As shown in Figure 2 and Figure 4, the stopper 500 is fit in the rear end portion of the first connector housing 120 and fixed. That is, projected engaging sections 550 are provided on the outer side surface of the stopper 500. The stopper 500 is fixed to the first connector housing 120 by fitting the engaging sections 550 of the stopper 500 in recesses 125 formed on the inner surface of a rear part of the first connector housing 120.

A sectional shape of the stopper 500 is formed substantially equal to a sectional shape of the spacer 400.

A cylindrical cavity 520 is provided on the inside of the stopper 500 such that the rear end portions of the coil springs 300 can sink. The stopper 500 holds the two coil springs 300 in parallel. Consequently, it is possible to secure the length of the coil springs 300 and reduce the size of the entire first connector 110.

In this case, the length of the cylindrical cavity 520 provided in the stopper 500 is preferably equal to or larger than a quarter of the maximum length of the coil springs 300 stored in the accommodation section and more preferably equal to or larger than one third of the maximum length.

A recessed groove 501 through which the optical cable A passes is formed on the upper surface of the stopper 500. The recessed groove 501 communicates with the outside of the first connector housing 120. The recessed groove 501 is opened to the outside of the first connector housing 120.

In this embodiment, the first connector housing 120 and the stopper 500 are separate members. However, the first connector housing 120 and the stopper 500 may be integrally molded.

In this embodiment, the cavity 520 is formed on the inside of the stopper 500 such that the rear end portions of the coil springs 300 can sink. However, the coil springs 300 may be held by forming, in the stopper 500, convex protrusions inserted into the centers of the coil springs 300.

As explained above, the pair of coil springs 300 functioning as biasing members is provided between the spacer 400 and the stopper 500. Recessed grooves 401 and 501 for allowing the optical cable A to pass are respectively provided in the spacer 400 and the stopper 500.

The recessed grooves 401 and 501 are formed in sizes enough for the optical cable A to pass and are respectively opened in a dividing direction of the divided bodies 120A and 120B of the first connector housing 120.

Consequently, for example, when there is a defect in connection of an optical wire or when a connection circuit of an optical fiber is to be changed, it is possible to easily take out and replace the ferrule and the optical fiber simply by dividing the divided bodies 120A and 120B from the first connector housing 120.

### (Biasing members)

Two biasing members in this embodiment are provided between the spacer 400 and the stopper 500 and applies a biasing force to the first ferrule 130 and applies a contact force to the end face of the first ferrule 130 and the end face of the second ferrule 230. As the biasing members in this embodiment, the coil springs 300 are used. However, an elastic member such as rubber, a leaf spring, sponge, or the like may be used. The biasing members in this embodiment are shown in Figure 4.

The coil springs 300 in this embodiment are provided to be stretched between first supporting sections 430 formed on both sides of the spacer 400 and second supporting sections 530 formed on both sides of the stopper 500. A space section between both the coil springs 300 functions as a passage of the optical cable A. Accordingly, the optical cable A connected to the first ferrule 130 is extended to the outside of the first connector housing 120 through the recessed groove 401 of the spacer 400, the space section, and the recessed groove 501 of the stopper 500.

As the coil springs 300, a stainless steel wire, a piano wire, or the like can be used. However, it is preferable to use a high-strength stainless steel wire. A spring constant of one coil spring 300 is preferably 1.0 N/mm or more and 6.0 N/mm or less and more preferably 2.0 N/mm or more and 5.0 N/mm or less.

The outer diameter of the coil spring 300 is preferably 1.8 mm or more and 2.4 mm or less and more preferably 2.1 mm or more and 2.3 mm or less. In that case, the thickness of the first ferrule 130 and the second ferrule 230 is preferably 1.0 mm or more and 1.5 mm or less and more preferably 1.2 mm or more and 1.3 mm or less.

Consequently, it is possible to reduce the size of the first connector 110 while applying a sufficient contact force to the connection end faces of the optical fibers.

Specifications of the coil springs 300 is selected as appropriate according to a type of the optical fiber Af connected to the coil springs 300. When a sixteen-fiber MT ferrule is used, the spring constant of one coil spring 300 is preferably 1.0 N/mm or more and 6.0 N/mm or less and more preferably 3.8 N/mm or more and 4.5 N/mm or less.

As explained above, the surfaces of the closed ends (both the end portions) of the coil spring 300 are respectively machined or processed perpendicular to the axes. The bottoms of the cavities 420 and 520 respectively formed in the spacer 400 and the stopper 500 are formed as flat surfaces.

Consequently, since a pressing force of the coil spring 300 acts in the same direction as the axial direction of the optical fibers, it is possible to uniformly apply the pressing force to the optical fibers and stability of a spring force is improved. It is possible to reduce the size of the first connector 110 while applying a sufficient contact force to the connection end faces of the optical fibers.

Surfaces of both end portions 301 (closed ends) of the coil spring 300 are preferably machined or processed perpendicular to the axes.

In general, a coil spring is formed by winding a metal wire in a spiral shape. Therefore, the coil spring is wound in the spiral shape at the end portion of the coil spring (for example, an arc wound on a circumference). However, in this embodiment, the arc of the circumference of the end portion or an arc of a half circumference is not machined or processed into the spiral shape. The surface of an arc of the end portion 301 is located within the plane perpendicular to the axis by forming a circle or an arc coaxial with the core of the coil spring.

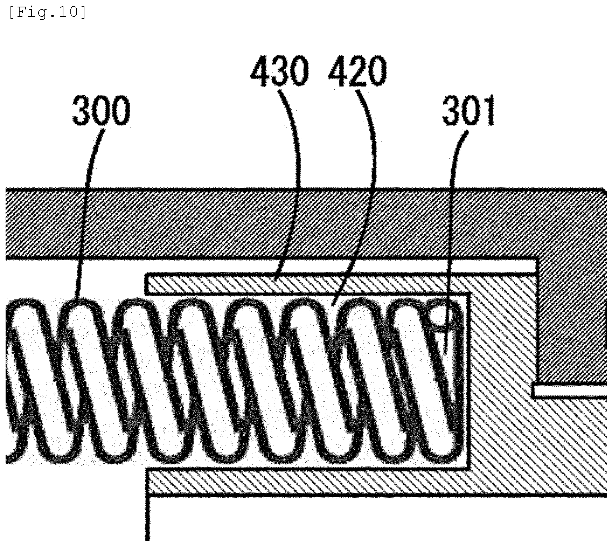

As shown in Figure 10, the end portion 301 of the coil spring 300 is a part in contact with the bottom surface of the cylindrical cavity 420 (or the cavity 520). Since the surface of the end portion 301 is machined or processed perpendicular to the axis, the pressing force of the coil spring acts in the same direction as the axial direction of the optical fibers. Therefore, it is possible to uniformly apply the pressing force to the optical fibers and stability of a spring force is improved. Note that this end portion may be polished to obtain an accurate perpendicular plane.

Figure 3 is a left side view of the optical connector 10 (a diagram showing a rear end face of the first connector 110). Cavities of the first ferrule 130 and the spacer 400 which are hidden by the stopper 500 and cannot be viewed are indicated by dotted lines (see Figure 2). Two axes P of the pair of coil springs 300 are provided on the same plane as the center axes of two guide pin insertion holes 116 of the first ferrule 130. Extended lines of the guide pin insertion holes 116 are disposed to be separated by the same predetermined distance on the inner side of the pair of coil springs 300. The optical cable A is disposed on the inner side of the two guide pin insertion holes 116.

With such a configuration, even if a small ferrule is used, it is possible to securely connect the optical fibers. It is possible to obtain the optical connector 10 with a small connection loss even if the optical connector 10 is used for high-density optical connection in which the number of connected optical fibers is large.

Note that the predetermined distance in the present invention is selected as appropriate according to the size and the like of the ferrule. However, for example, the predetermined distance may be selected from a range of 1.0 mm or more and 10.0 mm or less and, specifically, may be any one of 2.0 mm, 4.0 mm, and 8.0 mm. "On the same plane" in the present invention includes a range in which the distance from the plane including the center axes of the two guide pin insertion holes 116 is within 10% of the distance of the two guide pin insertion holes 116 or a range in which the distance is within ±3 mm.

### (Second connector 210)

The second connector 210 includes the second connector housing 220 formed by a tubular body having a substantially rectangular shape in cross section, the second ferrule 230 provided in the accommodation section formed in the second connector housing 220, a pin holder 600 for holding the guide pins 40, and a fixing member 510 for fixing the pin holder 600.

Note that, since the stopper 500 of the first connector 110 and the fixing member 510 of the second connector 210 are similar in external shapes thereof, common components can be used. Consequently, it is possible to reduce manufacturing costs.

Like the first connector housing 120, the second connector housing 220 is integrally formed in a substantially tubular shape by, for example, a synthetic resin material. Like the first ferrule 130, the second ferrule 230 is integrally molded in a thin plate shape by a synthetic resin material.

### (Second connector housing 220)

Locking sections 222 to which the locking pieces 122 can be locked are formed on facing first and second side surfaces of the second connector housing 220. Guide sections 224 and 224' which guide the guide pieces 124 and 124' are formed on facing third and fourth side surfaces of the second connector housing 220.

The second connector housing 220 has a rectangular shape. As the size of the second connector housing 220, lateral width is preferably 10 mm or more and 15 mm or less and more preferably 12 mm or more and 14 mm or less. Height is preferably 3 mm or more and 10 mm or less and more preferably 4 mm or more and 6 mm or less. Depth is preferably 10 mm or more and 30 mm or less and more preferably 10 mm or more and 20 mm or less. Consequently, it is possible to easily connect an optical wire in a narrow environment such as a server.

### (Divided bodies of the second connector housing 220)

As shown in Figure 5, the second connector housing 220 also can be divided into a divided body 220A and a divided body 220B and is divided in the direction (the up-down direction) perpendicular to the connecting direction. In Figure 2, a reference top view at the time when the divided body 220A is removed from the second connector housing 220 is shown.

When the divided body 220A is detached from the second connector housing 220, it is possible to attach the second ferrule 230 and the optical cable B to the divided body 220B of the second connector housing 220 without separating the second ferrule 230 and the optical cable B and it is possible to detach the second ferrule 230 and the optical cable B from the divided body 220B without separating and cutting the second ferrule 230 and the optical cable B.

Note that, in this embodiment, an example is explained in which the second connector housing 220 includes the divided bodies 220A and 220B. However, the second connector housing 220 may be a tubular integrated molded product.

Similarly, when the second connector housing 120 has a tubular shape, since the fixing member 510 and the pin holder 600 are disposed to be opened in the same direction, by inserting these components from a rear part of the second connector housing 220, it is possible to attach and detach the second ferrule 230 and the optical cable B without separating the second ferrule 230 and the optical cable B. Therefore, it is possible to replace or retrofit the components. It is possible to assemble the second connector 210 by combining these components.

### (Pin holder 600)

As shown in Figure 2 and Figure 4, the pin holder 600 in this embodiment is provided between the second ferrule 230 and the fixing member 510 and holds the guide pins 40 for precisely aligning the connection end faces of the first ferrule 130 and the second ferrule 230.

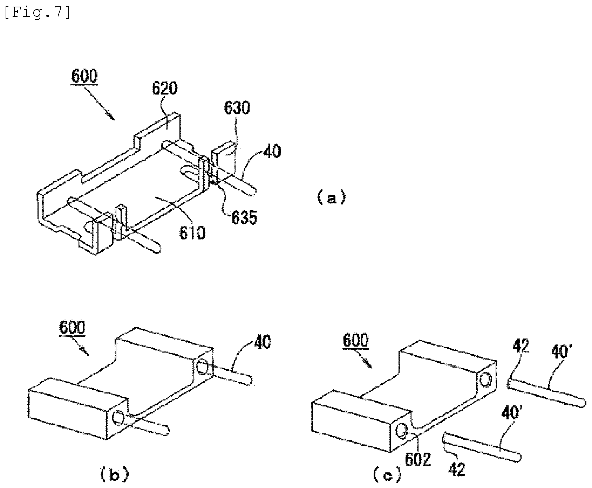

As shown in Figure 7, the pin holder 600 (with pins) includes a pin holder main body 610 (without pins) having an external shape substantially equal to the sectional shape of the second ferrule 230. The guide pins 40 are provided from the pin holder main body 610 toward the first connector 110 side. The guide pins 40 are inserted through guide holes formed in the second ferrule 230. The distal end portions of the guide pins 40 project from the connection end face of the second ferrule 230.

The fixing member (a stopper) 510 is provided on the rear end side of the pin holder 600 (the opposite side to the connection end face of the second ferrule 230) and fixes the pin holder 600 to the second connector housing 220.

In the pin holder 600 and the fixing member 510, recessed grooves 601 and 511 are respectively provided to enable the optical cable B connected to the second ferrule 230 to pass and to be detachable.

As the pin holder 600 in this embodiment, as shown in Figure 7(a), a pin holder made by bending one metal plate can be used. The pin holder 600 shown in Figure 7(a) includes a bottom plate (the pin holder main body) 610 and wall pieces 620 and pin guide pieces 630 bent from both end portions of the bottom plate 610. Supporting holes 635 through which the guide pins 40 pass are provided in the pin guide pieces 630. Not-shown guide pin grooves are formed on the circumferences of the guide pins 40. By allowing the guide pins 40 to pass through the supporting holes 635, the guide pin grooves engage in the supporting holes 635. The guide pins 40 are stably held by the pin holder 600.

Note that the pin holder 600 is not limited to the pin holder 600 shown in Figure 7(a). For example, as shown in Figure 7(b), the pin holder 600 may be a resin molded body by a metal mold and may be the pin holder 600 which fixes the guide pins 40 therein.

The pin holder 600 may be a form shown in Figure 7(c). That is, flanges 42 may be provided on the rear end side (the opposite side to connection end faces) of guide pins 40' and counterbore sections 602 having depth enough for fitting the flanges 42 may be provided in the pin holder 600. In this case, the flanges 42 of the guide pins 40' and the counterbore sections 602 of the pin holder 600 engage and the guide pins 40' are held. For example, when the diameter of the guide pins 40' is 0.7 mm, the diameter of the flanges may be set to 2.0 mm, the depth of the counterbore sections may be set to 0.2 mm, and the diameter of the counterbore sections may be set to 2.0 mm.

The material of the pin holder 600 may be made of metal or may be made of rein.

In the pin holder 600 shown in Figures 7(a) to 7(c), a recess through which optical fibers pass is formed.

### (Locking pieces 122 and locking sections 222)

As shown in Figure 1, Figure 2, and Figure 4, in the first connector housing 120 in this embodiment, the locking pieces 122 (clutch mechanisms) respectively extended toward the second connector housing 220 are provided on the facing first and second side surfaces of the first connector housing 120, the cross section of which has a square tubular shape long in the lateral direction.

In the first connector housing 120, a pair of locking pieces 122 and 122 are projected to the outside from the facing left and right side surface sections. The shape of the locking pieces 122 can be variously changed.

In this embodiment, the locking pieces 122 include elastic pieces 122c projecting outward from the first connector housing 120 and claw sections 122a formed at the distal end portions of the elastic pieces 122c. The locking sections 222 formed in the second connector housing 220 include hole sections in which the claw sections 122a can be locked.

Convex releasing sections 122b are provided in the locking pieces 122 and 122. Locking can be released by pinching the releasing sections 122b with fingers.

### (Guide pieces 124 and guide sections 224)

In the first connector housing 120 in this embodiment, guide pieces 124 and 124' respectively extended toward the second connector housing 220 are provided on facing third and fourth side surfaces of the first connector housing 120, the cross section of which has the square tubular shape long in the lateral direction.

In the first connector housing 120, the pair of locking pieces 122 and 122 are projected to the outside from the facing left and right side surface sections and a pair of guide pieces 124 and 124' are projected to the outside from facing upper and lower side surface sections of the first connector housing 120.

In the second connector housing 220, guide sections 224 and 224' corresponding to the shapes of the guide pieces 124 and 124' of the first connector housing 120 are provided.

In this embodiment, the guide piece 124 has a rectangular shape and the guide piece 124' has a tongue shape. Consequently, a method of connecting the optical cables A and B is not misjudged.

In this embodiment, the distal ends of the guide pieces 124 and 124' extend further to the second connector side than the distal ends of the locking pieces 122 and 122. Consequently, it is possible to fit the first connector housing 120 and the second connector housing 220 after precisely positioning the first connector housing 120 and the second connector housing 220.

Further, the extension length of the tongue-shaped guide piece 124' may be set longer than the extension length of the rectangular guide piece 124. This can ensure smooth fitting of both connector housings.

### (First ferrule 130 and second ferrule 230)

Details of the first ferrule 130 and the second ferrule 230 are as explained below.

The first and second ferrules 130 and 230 respectively have exteriors of a substantially rectangular-shaped or a thin plate-shaped and are molded by resin or the like.

The first and second ferrules 130 and 230 may be formed of moldable resin such as polyphenylene sulfide or liquid crystal polymer (LCP) or strength and stability of the resin may be enhanced with an additive such as silica (SiO2) contained therein. The first and second ferrules 130 and 230 may be formed of an inorganic material such as ceramics.

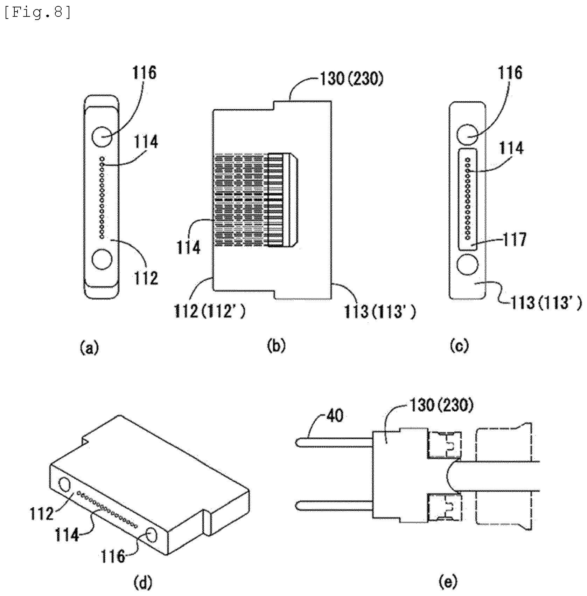

As shown in Figure 8, the first and second ferrules 130 and 230 include a flat first end face 112 and a flat second end face 112' provided on one end side in the connecting direction and rear end faces 113 and 113' provided on the other end side. The first and second ferrules 130 and 230 include pairs of side surfaces, bottom surfaces, and upper surfaces extending in the connecting direction. Note that, in Figure 8(b), optical fiber insertion holes 114 into which optical fibers are inserted are indicated by dotted lines.

On the first end face 112 and the second end face 112', a pair of guide pin insertion holes (guide holes) 116 provided side by side in a direction crossing a cross section extending along an optical axis of an optical fiber is formed. The pair of guide pins 40 and 40 are inserted into the pair of guide pin insertion holes 116. That is, relative positions of the first ferrule 130 and the second ferrule 230 are determined by the pair of guide pins 40 and 40.

A plurality of optical fiber insertion holes 114 into which optical fibers are inserted are formed on the first end face 112. An introduction hole 117 for receiving a ribbon fiber (an optical cable) including a plurality of optical fibers is formed on the rear end face 113 of the first and second ferrules 130 and 230 (Figure 8(c)).

The width dimension of the introduction hole can be set to 1.5 mm or more and 5 mm or less and is preferably, in particular, 2 mm or more and 4 mm or less. When the width dimension of the introduction hole is 2 mm, an optical fiber can be an eight-fiber ribbon. When the width dimension of the introduction hole is 3 mm, the optical fiber can be a twelve-fiber ribbon. When the width dimension of the introduction hole is 4 mm, the optical fiber can be a sixteen-fiber ribbon. Note that the width dimension of the introduction hole can be changed as appropriate according to the thickness of secondary coating of the ribbon fiber.

Note that an example in which the ribbon fiber is used is explained in this embodiment. However, an aggregate obtained by collecting a plurality of single-fibers may be used and the fibers may be inserted into introduction holes 117.

The plurality of optical fiber insertion holes 114 are formed to pierce through the first ferrule 130 from the first end face 112 to the introduction hole 117 side. Optical fibers are respectively inserted into the optical fiber insertion holes 114 and held.

The optical fibers respectively extend in the connecting direction and are disposed side by side in a row in the horizontal direction crossing the connecting direction. The number of the optical fiber insertion holes 114 can be determined according to a purpose. The number of the optical fiber insertion holes 114 may be one (in this case, the ferrule is a single-fiber ferrule) or may be plural (in this case, the ferrule is a multi-fiber ferrule). In this embodiment, an example of a multi-fiber MT ferrule such as a twelve-fiber or sixteen-fiber MT ferrule in which optical fibers are arrayed in a row is explained.

The first ferrule 130 and the second ferrule 230 used in this embodiment are shown in Figure 8.

The first ferrule 130 and the second ferrule 230 used in this embodiment are ferrules smaller than ferrules specified by normal standards (an MT connector of JIS C5981 and an MT ferrule of JIS C5964-5).

That is, the length (the lateral width in Figure 8(b)) of the ferrule is 4 mm, the length (the longitudinal long side in Figure 8(a)) of a connection end face of the ferrule is 6.4 mm, and the thickness (the lateral short side in Figure 8(a)) of the ferrule is 1.25 mm. As the first ferrule 130 and the second ferrule 230 used in this embodiment, a twelve-fiber ferrule with a fiber core diameter ϕ125 µm is used.

When a load generated by one coil spring 300 is approximately 5 N, a sufficient contact force of approximately 10 N can be applied to the connection end faces of the first ferrule 130 and the second ferrule 230. Note that, for example, when a twelve-fiber ribbon is connected to a PC, the contact force is preferably 10 N. When a sixteen-fiber ribbon is connected to a PC, the contact force is preferably 20 N. Therefore, the generated load of the coil spring 300 can be designed as appropriate according to the number of connected fibers or a method of connecting the fibers.

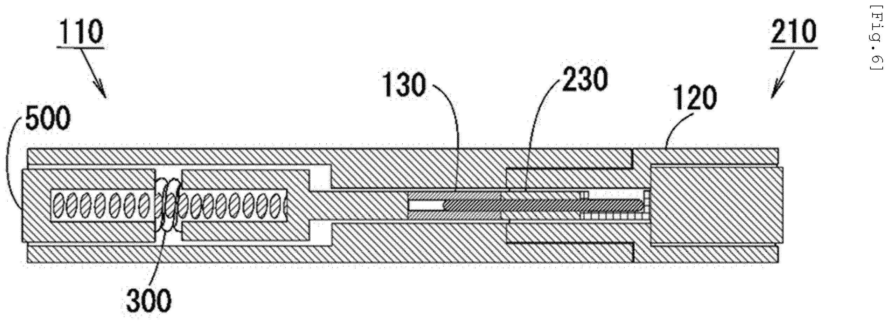

Here, Figure 6 is a sectional view showing a fitting state of the first connector 110 (in this embodiment, a male plug) and the second connector 210 (in this embodiment, a female receptacle plug) in this embodiment.

The pair of coil springs 300 is compressed, whereby the first ferrule 130 slides to the rear end side (the opposite side to the connecting direction) of the housing main body. In this embodiment, the connection end faces of the first ferrule 130 and the second ferrule 230 move further to the rear end side than the first connector housing main body. Therefore, since the connection end faces which can be viewed before connection move to the inside of the first connector housing main body after the connection, the connection end faces are protected from stains and the like.

In this embodiment, the ferrules and the optical connectors for optically coupling multimode optical fibers are explained above. However, the present invention can also be applied to ferrules and optical connectors for optically coupling single-mode optical fibers.

### <Second Embodiment>

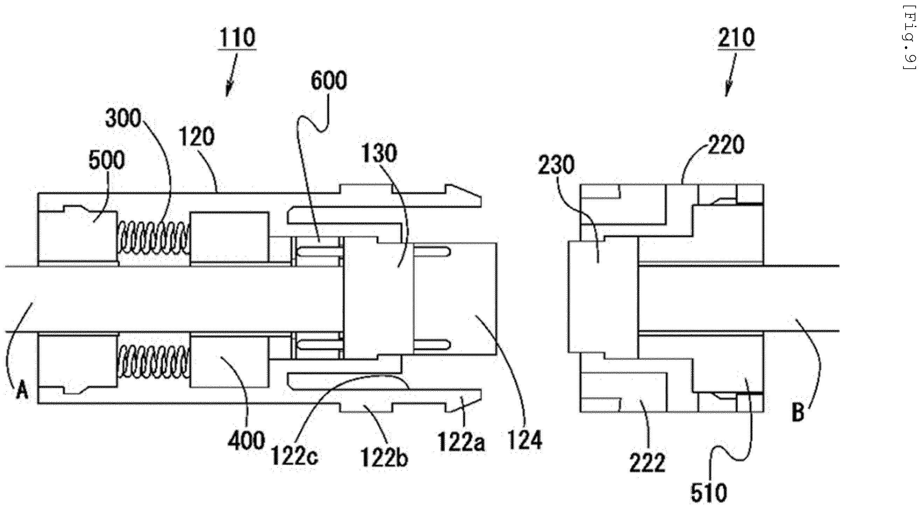

The optical connector 10 according to a second embodiment is shown in Figure 9. In the second embodiment, the pin holder 600 is provided on the first connector 110 side.

Therefore, compared with the first embodiment, the length of the spacer 400 is smaller by the length of the pin holder 600.

In this case, since all projecting members including the guide pins 40 are provided on the first connector 110 side, the second connector 210 side (the receptacle plug side) can be made flat. For example, when an optical wire is mounted on a substrate, the second connector 210 (the receptacle plug) can be disposed on the substrate side and the first connector 110 (the plug) can be provided on a connection cable side.

Note that, in this case, the pin holder 600 used in the first embodiment and the pin holder 600 used in the second embodiment may be the pin holders 600 having the same shape.

On the other hand, in a third embodiment explained below, since the first connector housing 120 and the second connector housing 220 have different internal shapes, when the pin holder 600 is provided in the first connector housing 120, the shape of the pin holder 600 is preferably different from the shape of the pin holder 600 provided in the second connector housing 220.

### <Third Embodiment>

About a third embodiment, differences from the first embodiment are explained.

### (First connector 110)

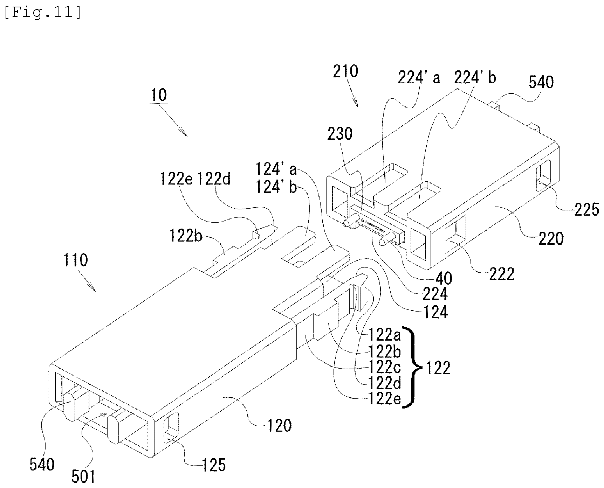

In the third embodiment, in the first connector housing 120, as shown in Figure 11, three guide pieces 124, 124'a, and 124'b respectively extend in a connecting direction (a direction of a second connector). The guide piece 124 is provided on the bottom surface side of the first connector housing 120. The guide pieces 124'a and 124'b are provided on the upper surface side (a surface facing the guide piece 124).

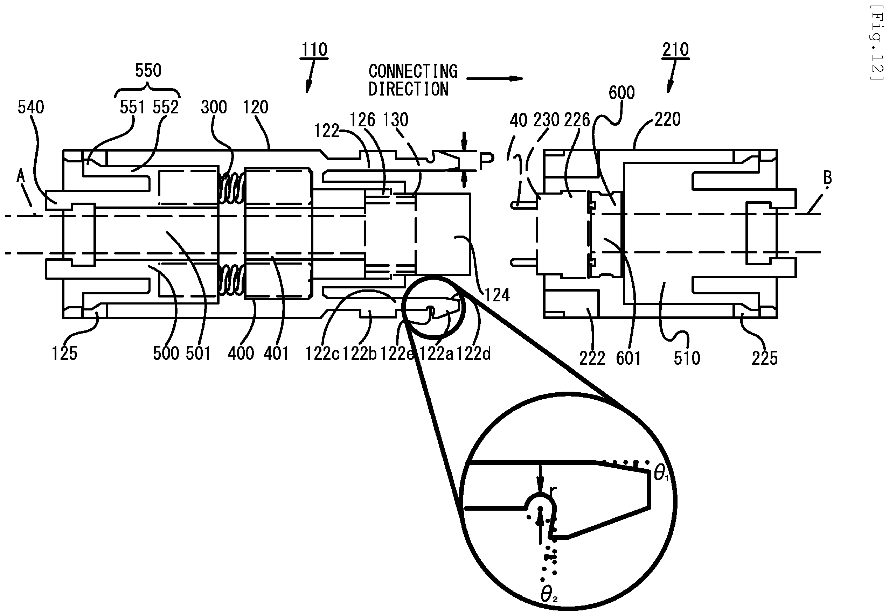

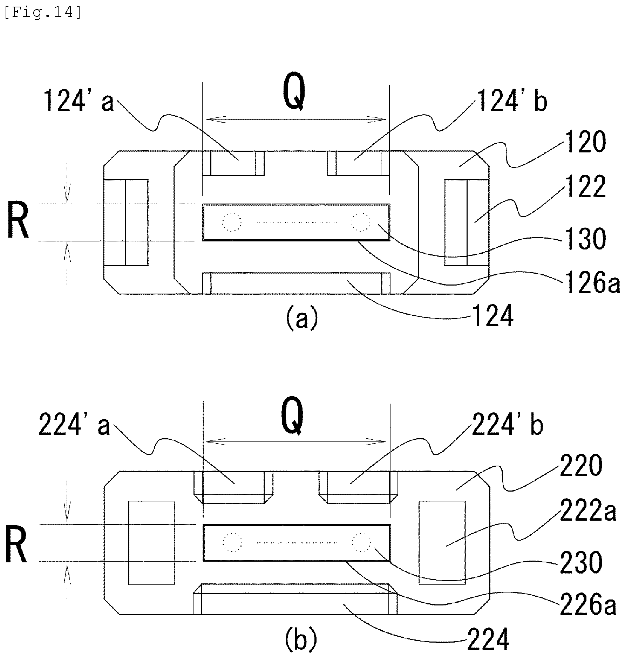

Figure 12 is a reference top view at the time when divided bodies of the optical connector 10 in the third embodiment are opened. In the optical connector 10, the optical cables A and B, the first ferrule 130, the second ferrule 230, and the like are indicated by broken lines. Figure 14(a) is a schematic explanatory diagram showing a connection end face of the first connector 110 in the third embodiment. Figure 14(b) is a schematic explanatory diagram showing a connection end face of the second connector 210 in the third embodiment. In Figure 14, ferrules are indicated by dotted lines.

In the first connector housing 120, an accommodation section 126 for accommodating the first ferrule 130 is provided and an opening section 126a is provided such that a connection surface of the first ferrule 130 can project. As shown in Figure 14(a), the opening section 126a is preferably set to the same size (opening area) as the connection surface of the first ferrule 130. As the size of the opening section 126a, for example, a width dimension (an opening length in a direction in which optical fibers are disposed side by side) can be set to 4 mm or more and 8 mm or less and is preferably 6 mm or more and 7 mm or less. A height dimension can be set to 0.5 mm or more and 3 mm or less and is preferably 1 mm or more and 2 mm or less.

The size of the opening section 126a is preferably set to the same size as a connection surface of the first ferrule 130. Further, 0 to +0.2 mm is preferably provided as a tolerance in the width direction and 0 to +0.2 mm is preferably provided as a tolerance in the height direction.

The first ferrule 130 horizontally moves in the connecting direction in the first connector housing 120 every time the first connector 110 is connected or disconnected. By designing the opening section 126a as explained above, the first ferrule 130 can be securely fixed without swinging in an oblique direction in the accommodation section 126. Therefore, even if the first ferrule 130 is smaller than the normal MT ferrule, it is possible to minimize a connection loss and minimize variation of a connection loss involved in attachment and detachment.

### (Stopper 500)

As shown in Figure 12, the engaging sections 550 for engaging with the recesses 125 are symmetrically formed on both sides of the rear end portion of the stopper 500 in this embodiment. In the engaging sections 550, extending sections 552 extending in a direction opposite to the connector connecting direction and projecting sections 551 at the distal ends of the extending sections 552 are formed. The projecting sections 551 are fit in the recesses 125 formed in the rear part of the first connector housing 120, whereby the stopper 500 is fixed to the first connector housing 120.

When the stopper 500 once fitted is taken out, the projecting sections 551 engaged in the recesses 125 are desirably pressed into the inner side from the outer side by tweezers or the like. In this case, the length of the extending sections 552 is preferably 3 mm or more and 7 mm or less and more preferably 4 mm or more and 6 mm or less. Consequently, since the extending sections 552 are elastically deformed, it is possible to easily take out the stopper 500 from the rear of the first connector 110.

At both the ends on the rear side of the stopper 500, boot holding sections 540 are formed to project toward a direction opposite to the connecting direction. Not-shown boots can be held by the boot holding sections 540.

A part of the boot holding sections 540 is preferably designed to extend to the outside from the rear end portion of the first connector housing 120. Consequently, when the stopper 500 is fit in from the rear, since the stopper 500 can be pushed in by holding the boot holding sections 540, it is possible to easily fit in the stopper 500.

In this case, like the components of the spacer 400, the stopper 500, and the like, the boots can be retrofitted in assembly of the first connector 110 by combining the components opened in one direction. Note that the boots may be formed in a tubular shape and inserted into optical fibers and assembled in advance such that the boots are used in an existing MPO and the like.

### (Second connector 210)

In the third embodiment, in the second connector 210, as shown in Figure 11, guide sections 224, 224'a, and 224'b are formed on the facing third and fourth side surfaces of the second connector housing 220. The guide sections 224, 224'a, and 224'b respectively play a role of guiding the guide pieces 124, 124'a, and 124'b of the first connector housing 120.

As shown in Figure 12, in the second connector housing 220, an accommodation section 226 which accommodates the second ferrule 230, the guide pins 40, and the pin holder 600 is provided and an opening section 226a is provided such that a connection surface of the second ferrule 230 can project. As shown in Figure 14(b), the opening section 226a is preferably set to the same size (opening area) as the connection surface of the second ferrule 230. As the size of the opening section 226a, for example, a width dimension can be set to 4 mm or more and 8 mm or less and is preferably 6 mm or more and 7 mm or less. A height dimension can be set to 0.5 mm or more and 3 mm or less and is preferably 1 mm or more and 2 mm or less.

The size of the opening section 226a is preferably set to the same size as the connection surface of the second ferrule 230. Further, 0 to +0.2 mm is preferably provided as a tolerance in the width direction and 0 to +0.2 mm is preferably provided as a tolerance in the height direction.

The second ferrule 230, the guide pins 40, and the pin holder 600 are accommodated in the accommodation section 226 of the second connector 210.

It is preferable to adopt a floating structure for machining the size of the accommodation section 226 slightly larger than a total of the sizes of the second ferrule 230 and the pin holder 600. Specifically, it is preferable to design the length in the connecting direction of the accommodation section 226 to be the same as a total of the lengths in the connecting direction of the second ferrule 230 and the pin holder 600 and set machining tolerances to 0 mm in a minus direction and 0.1 mm or more in a plus direction.

Consequently, since the accommodation section 226 is machined such that a slight gap is formed before fitting, after the fitting, the connection end face of the first ferrule 130 and the connection end face of the second ferrule 230 can be aligned perpendicularly to a stress direction (a connecting direction) of the coil spring 300. That is, by providing a fine adjustment mechanism by the floating structure, it is possible to minimize a connection loss and minimize variation of the connection loss involved in attachment and detachment.

### (Locking pieces 122 and locking sections 222)

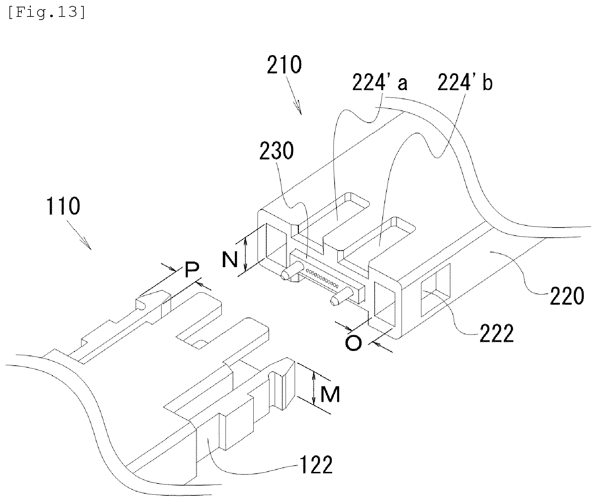

As illustrated in Figure 11, the locking pieces 122 and 122 are provided to extend from the facing first and second side surfaces of the first connector housing 120. As shown in Figures 12 and 13, height M of the locking piece 122 is preferably set the same as height N of the locking sections 222 explained below, can be set to, for example, 2 mm or more and 4 mm or less, and is preferably set to 2.8 mm or more and 3.2 mm or less. In that case, a tolerance of the height M of the locking piece 122 is preferably set to 0 to -0.05 mm.

Width P of the locking piece 122 is preferably set the same as width O of the locking sections 222 explained below, can be set to, for example, 1 mm or more and 2 mm or less, and is preferably set to 1.4 mm or more and 1.7 mm or less.

In this embodiment, the locking piece 122 includes the claw section 122a which locks to the locking sections 222, the releasing section 122b and the elastic piece 122c for unlocking, and a guiding section 122d which facilitates insertion into the locking sections 222.

Note that, as shown in Figure 12, a machining section 122e may be provided at a corner portion of the locking sections 222 according to necessity. Consequently, since relief machining at a cutting time can be performed, it is possible to improve machining accuracy. When fitting with the claw section 122a is considered, a machining section 122e having a C surface or a radius r may be present at a corner portion where the locking sections 222 and the claw section 122a fit. In this case, the machining section 122e can be formed in a circle having the radius r of 0.2 mm or more and 0.4 mm or less. Consequently, it is possible to firmly maintain a locking state of the claw section 122a for a long time.

In the claw section 122a, the guiding section 122d formed by chamfering an inner side corner portion of an end portion of the claw section 122a is formed. An angle θ°₁ of the guiding section 122d is preferably 5 degrees or more and 15 degrees or less and more preferably 8 degrees or more and 12 degrees or less. Consequently, the claw section 122a is easily inserted into the locking sections 222.

An angle θ°₂ provided in the machining section 122e (an angle added to 270° of the radius r) is preferably 1 degree or more and 15 degrees or less and more preferably 5 degrees or more and 12 degrees or less. Consequently, the locking piece 122 can securely engage for a long period.

As shown in Figure 13, the locking sections 222 formed in the second connector housing 220 includes a rectangular opening for inserting the claw section 122a on the connection surface side. Width O of the locking sections 222 is preferably set the same as the width P of the locking piece 122, can be set to, for example, 1 mm or more and 2 mm or less, and is preferably set to 1.4 mm or more and 1.7 mm or less. In that case, a machining tolerance of the width O is preferably set to 0 to +0.1 mm.

Height N of the locking sections 222 is preferably set the same as the height M of the locking piece 122, can be set to, for example, 2 mm or more and 4 mm or less, and is preferably set to 2.8 mm or more and 3.2 mm or less. In that case, a machining tolerance of the height N is preferably 0 to +0.05 mm.

Consequently, when the locking piece 122 is locked to the locking sections 222, the first connector 110 and the second connector 210 are more stably fixed. In particular, when an external force in a twisting direction is applied by attachment and detachment or the like, the external force is less easily transmitted to the connection end faces. Therefore, it is possible to more securely bring the first ferrule 130 and the second ferrule 230 into contact, it is possible to minimize a connection loss, and it is possible to minimize variation of the connection loss involved in attachment and detachment.

### (Guide piece 124 and guide section 224)

In the first connector housing 120 in this embodiment, the rectangular guide pieces 124'a, 124'b, and 124 are projected in the connecting direction from a third side surface (an upper surface) and a fourth side surface (a lower surface).

In the second connector housing 220, guide sections 224'a, 224'b, and 224 corresponding to the shapes of the guide pieces 124'a, 124'b, and 124 of the first connector housing 120 are provided.

In this embodiment, two guide pieces 124'a and 124'b projecting from the third side surface are installed at an interval. Width dimensions of the guide pieces 124'a and 124'b are respectively preferably sizes equal to or larger than a quarter and equal to or smaller than a half of the width dimension of one guide piece 124 projecting from the fourth side surface. An interval (a pitch) between the guide pieces 124'a and 124'b is preferably a size equal to or larger than a quarter and equal to or smaller than one third of the lateral width of the first connector housing 120. Projection lengths of the guide pieces 124 (lengths in the connecting direction of portions overlapping the guide sections 224) are preferably a size equal to or larger than one sixth and equal to or smaller than a half with respect to the lateral width (the length in an optical fiber array direction) of the first connector housing 120.

In this embodiment, since the number of guide pieces projecting from the third side surface and the number of guide pieces projecting from the fourth side surface are different, a connecting direction (the up-down direction) of the first connector 110 and the second connector 210 is not misjudged.

Since the two guide pieces 124'a and 124'b are respectively formed in rectangular shapes on the third side surface, the first connector 110 and the second connector 210 are guided to be securely connected in parallel. Therefore, when the first connector housing 120 and the second connector housing 220 are connected, since the guide pins 40 are securely guided to the guide pin insertion holes 116 of the first ferrule 130, it is possible to prevent the guide pins 40 from colliding with the connection end face of the first ferrule 130. Note that the number of projected guide pieces 124'a and 124'b is not limited to two and may be set to three.

In the guide pieces 124, 124'a, and 124'b in this embodiment, chamfered sections are provided at rectangular distal ends. Consequently, the first connector 110 and the second connector 210 are easily connected.

Examples of the present invention are explained below. However, the configuration of the present invention is not limited by the following illustration.

### <Example 1>

The first connector 110 (a connector) and the second connector 210 (a receptacle) according to the first embodiment were manufactured as explained below and set as an example 1.

The first connector housing 120 and the second connector housing 220 in this example were manufactured by cutting using polyacetal resin (POM resin). The lateral widths of the first connector housing 120 and the second connector 210 were set to 13.5 mm. Width Q of the opening sections 126a and 226a for the first ferrule 130 and the second ferrule 230 to project was set to 6.60 mm and height R thereof was set to 1.55 mm.

The height M of the locking piece 122 of the first connector housing 120 was set to 2.5 mm and the width P thereof was set to 1.3 mm. The width O of the locking sections 222 of the second connector housing 220 was set to 1.5 mm and the height N thereof was set to 3.5 mm.

Note that the first connector housing 120 and the second connector housing 220 in the example are respectively tubular integral molded products.

The guide piece 124 on the lower surface side of the first connector housing 120 was formed in a rectangular shape having lateral width of 6.5 mm and projection length of 5.4 mm. The guide piece 124' on the upper surface side was formed in a tongue shape having lateral width of 5.5 mm, projection length of 5.4 mm, and a curvature radius of 2.75 mm.

The stopper 500 of the first connector housing 120 was obtained by cutting using PPS resin. In the stopper 500 and the spacer 400, the recessed groove 501 is formed in the center. The length dimension (the length in the connecting direction) of the stopper 500 was set to 5.9 mm and the width dimension (the length in the optical fiber array direction) of the stopper 500 was set to 12.1 mm.

In the example 1, a repeated attachment and detachment test was performed in order to check performance and attachment and detachment reproducibility of the optical connector 10. In the repeated attachment and detachment test, a twelve-fiber small MT ferrule to which twelve single mode optical fibers (ϕ125 µm) were fixed was mounted on the first connector 110 and the second connector 210. Connection loss measurement (IEC61300-3-45, JIS C61300-3-45) using an optical signal having a wavelength of 1.31 µm was performed while force of 10 N being applied to and made contact with the connection end face using the coil springs 300 having a spring constant of 2.1 N/mm.

Thereafter, evaluation was performed by a method of attaching and detaching the first connector 110 and the second connector 210, cleaning the connection end faces in every attachment or detachment, and measuring a connection loss in every connection. As a result of repeating the attachment and detachment, the cleaning, and the measurement three times using the same optical connector, an average connection loss was 0.44 dB and a standard deviation σ was 0.28.

### <Example 2>

The first connector 110 (the connector) and the second connector 210 (the receptacle) according to the third embodiment were manufactured as explained below and set as an example 2.

As in the example 1, the first connector housing 120 and the second connector housing 220 in this example were manufactured by cutting using polyacetal resin (the POM resin). The lateral widths of the first connector housing 120 and the second connector 210 were set to 13.5 mm. The width Q of the opening sections 126a and 226a for the first ferrule 130 and the second ferrule 230 to project was set to 6.5 mm and the height R thereof was set to 1.3 mm.

The height M of the locking piece 122 of the first connector housing 120 was set to 3.0 mm and the width P thereof was set to 1.55 mm. The radius r of the machining section 122e was set to 0.3 mm and the angle θ of the guiding section 122d was set to 10 degrees. The width O of the locking sections 222 of the second connector housing 220 was set to 1.6 mm and the height N thereof was set to 3.0 mm.

In the first connector housing 120, the rectangular guide pieces 124'a, 124'b, and 124 were formed to project. The width dimensions of the guide pieces 124'a and 124'b were set to 2.2 mm and the projection lengths thereof were set to 5.2 mm. The guide pieces 124'a and 124'b were formed at a 2.2 mm interval (pitch). The width dimension of the guide piece 124 was set to 6.6 mm and the projection length thereof was set to 5.2 mm.

The stopper 500 of the first connector housing 120 was manufactured using PPS resin as in the example 1. The length dimension (the length in the connecting direction) of the stopper 500 was set to 13.9 mm and the width dimension (the length perpendicular to the connecting direction) thereof was set to 12.0 mm. The length of the extending sections 552 of the stopper 500 was set to 5.4 mm and the length of the boot holding sections 540 of the stopper 500 was set to 8.4 mm.

In the example 2 as well, the repeated attachment and detachment test was performed as in the example 1. As a result of repeating the attachment and detachment, the cleaning, and the measurement five times using the same optical connector, the average connection loss was 0.18 dB and the standard deviation σ was 0.19.

Therefore, in the result obtained in the example 2, the connection loss was lower and variation was smaller than those in the example 1. Therefore, by configuring the connectors and setting the dimension design as in the example 2 and further providing the fine adjustment mechanism by the floating structure, it is possible to optically connect optical fibers in a state in which the connection loss is lower. Connection performance of the example 2 was comparable with the existing MPO connector and the like.

In the present invention, the optical connector 10 is equivalent to the "optical connector", the first connector 110 is equivalent to the "first connector", the second connector 210 is equivalent to the "second connector", the optical cable A is equivalent to the "first optical cable A", the optical cable B is equivalent to the "second optical cable B", the first ferrule 130 is equivalent to the "first ferrule", the second ferrule 230 is equivalent to the "second ferrule", the coil spring 300 is equivalent to the "biasing member", the spacer 400 is equivalent to the "spacer", the stopper 500 is equivalent to the "stopper", the pin holder 600 is equivalent to the "pin holder", the guide pin 40 is equivalent to the "guide pin", the locking piece 122 is equivalent to the "locking piece", the guide sections 224 and 224' are equivalent to the "guide section", the recessed grooves 501, 401, 511, and 601 are equivalent to the "recessed groove", the fixing member 510 is equivalent to the "fixing member", the claw section 122a is equivalent to the "claw section", the releasing section 122b is equivalent to the "releasing section", and the elastic piece 122c is equivalent to the "elastic piece".

The preferred embodiments of the present invention are as explained above. However, the present invention is not limited to only the embodiments. It would be understood that other various embodiments are made without departing from the spirit and the scope of the present invention. Further, in the embodiments, the action and the effects by the configuration of the present invention are explained. However, the action and the effects are an example and do not limit the present invention.

### Reference Signs List

- 10: Optical connector
- 40: Guide pin
- 110: First connector
- 120: First connector housing
- 122: Locking piece
- 122a: Claw section
- 122b: Releasing section
- 122c: Elastic piece
- 122d: Guiding section
- 122e: Machining section
- 124: Guide piece
- 224: Guide section
- 130: First ferrule
- 210: Second connector
- 220: Second connector housing
- 230: Second ferrule
- 300: Coil spring
- 400: Spacer
- 500: Stopper
- 600: Pin holder
- 501, 401, 511, 601: Recessed groove
- 510: Fixing member

## Claims

1. An optical connector comprising:
a first connector to which a first optical cable A is attached; and a second connector to which a second optical cable B is attached, terminals of an optical fiber Af included in the optical cable A and an optical fiber Bf included in the optical cable B being optically connected by fitting of the first connector and the second connector, wherein
the first connector includes: a first connector housing formed in a tubular body shape and having an accommodation section therein; a spacer which is in sliding contact with an inner surface of the accommodation section of the first connector housing and allows sliding of a first ferrule; a biasing member which biases the spacer toward the second connector side; and a stopper fixed to a rear section of the first connector housing on an opposite side from the second connector,
the second connector includes: a second connector housing formed by a tubular body; and an accommodation section capable of accommodating a second ferrule therein,
locking pieces and guide pieces extended toward the second connector housing are respectively provided in the first connector housing,
locking sections to which the locking pieces can be locked and guide sections which guide the guide pieces are formed in the second connector housing,
a recessed groove through which the first optical cable A passes is formed in the spacer and the stopper, and
the biasing member includes, between the spacer and the stopper, a pair of coil springs provided on both sides of the first optical cable A.

2. The optical connector according to claim 1, wherein
two axes of the pair of coil springs are provided in parallel and provided on planes including center axes of two guide pin insertion holes of the first ferrule, and
the pair of coil springs are disposed to be separated from each other by a predetermined distance on outer sides of the two guide pin insertion holes.

3. The optical connector according to claim 1 or 2, wherein a recessed groove formed in the spacer and a recessed groove formed in the stopper are opened in a same direction and housed in the first connector housing.

4. The optical connector according to any one of claims 1 to 3, wherein
a spring constant of one of the coil springs is 1.0 N/mm or higher and 6.0 N/mm or lower, and
the spacer is disposed to be capable of sliding 3.0 mm or less.

5. The optical connector according to any one of claims 1 to 4, wherein
the first connector housing further includes a pin holder,
a pair of guide pins are attachable to the pin holder, and the pin holder is provided between the first ferrule and the spacer.

6. The optical connector according to any one of claims 1 to 4, wherein
the second connector housing further includes a pin holder, and
the pin holder attaches a pair of guide pins and is provided between the second ferrule and the spacer.

7. The optical connector according to any one of claims 1 to 6, wherein
the locking pieces include: an elastic pieces projecting outward from the first connector housing; claw sections formed at distal end portion of the elastic pieces; and releasing sections capable of unlocking the claw sections, and
the locking sections include hole sections in which the claw sections can be locked.

8. The optical connector according to any one of claims 1 to 7, wherein the first connector and the second connector are capable of respectively housing ferrules having thickness of 1.0 mm or more and 1.5 mm or less, and an outer diameter of the coil springs is 1.8 mm or more and 2.4 mm or less.

9. The optical connector according to any one of claims 1 to 8, wherein both end portions of the coil springs are machined with their respective end faces perpendicular to axes.

10. The optical connector according to any one of claims 1 to 9, wherein distal ends of the first guide pieces extend further to a side of the second connector than distal ends of the locking pieces.

11. The optical connector according to any one of claims 1 to 10, wherein the guide pieces are provided on two facing surfaces different from surfaces on which the locking pieces are provided, and the two guide pieces are respectively formed in differently shaped rectangles.

12. A plug connectable to the first connector or the second connector of the optical connector according to any one of claims 1 to 11.
